(19) Europäisches Patentamt
European Patent Office
Office européen des brevets

(11) Veröffentlichungsnummer: **0 307 575 B1**

(12) **EUROPÄISCHE PATENTSCHRIFT**

(45) Veröffentlichungstag der Patentschrift: **25.03.92**

(51) Int. Cl.$^5$: **C08G 69/32**

(21) Anmeldenummer: **88111273.4**

(22) Anmeldetag: **14.07.88**

# (54) Verfahren zur Herstellung von hochmolekularen aromatischen Polyamiden.

(30) Priorität: **17.09.87 DE 3731185**

(43) Veröffentlichungstag der Anmeldung:
**22.03.89 Patentblatt 89/12**

(45) Bekanntmachung des Hinweises auf die Patenterteilung:
**25.03.92 Patentblatt 92/13**

(84) Benannte Vertragsstaaten:
**AT BE CH DE FR GB IT LI NL**

(56) Entgegenhaltungen:
**EP-A- 0 237 722**
**DE-A- 2 554 932**
**DE-A- 3 539 846**
**FR-A- 2 333 548**

(73) Patentinhaber: **HÜLS AKTIENGESELLSCHAFT**
**Patentabteilung / PB 15 - Postfach 13 20**
**W-4370 Marl 1(DE)**

(72) Erfinder: **Finke, Jürgen, Dr.**
**Am Alten Sportplatz 17a**
**W-4370 Marl(DE)**
Erfinder: **Bartmann, Martin, Dr.**
**Burgstrasse 35**
**W-4350 Recklinghausen(DE)**

EP 0 307 575 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Gegenstand der Erfindung ist ein Verfahren zur Herstellung von hochmolekularen aromatischen Polyamiden.

Aromatische Polyamide mit der wiederkehrenden Einheit

- CO - Ar - CO - NH - Ar' - X - Ar'' - Y - Ar'' - X - Ar' - NH -

zeichnen sich nicht nur durch hohe Temperaturbeständigkeit und gute mechanische Eigenschaften aus; sie sind auch thermoplastisch verarbeitbar (Elias/Vohwinkel, "Neue polymere Werkstoffe für die industrielle Anwendung", 2. Folge, Carl Hanser Verlag 1983, Seite 242 ff.). Dabei stehen X für einen Ethersauerstoff und Y für eine Carbonylgruppe und Ar, Ar' und Ar'' stehen unabhängig voneinander für die p- und m-Phenylengruppe. Aromatische Polyamide können auch durch Reaktion von aromatischen Dicarbonsäuren mit aromatischen Diisocyanaten (DE-OS 19 28 435) und durch Umsetzung von aromatischen Dicarbonsäurediarylestern mit aromatischen Diaminen hergestellt werden. Es sind Verfahren bekannt, bei denen man aromatische Polyamide direkt durch Reaktion von aromatischen Dicarbonsäuren und aromatischen Diaminen in Gegenwart von aromatischen Phosphiten erhält. Als Lösemittel haben sich für dieses Verfahren N-Methylsäureamide, insbesondere N-Methylpyrrolidon, bewährt. Mit anderen dipolar aprotischen Lösemitteln wie z. B. Dimethylsulfoxid werden dagegen keine polymeren Amide erhalten (vgl. F. Higashi et al.` J. Polym. Sci., Polym. Chem. Ed. 18, 1711 ff. (1980).

Die DE-OS 25 54 932 z. B. beschreibt semipermeable Membranen (Filme), bestehend aus vollaromatischem Copolyamid, sowie ein Verfahren zur Herstellung derselben aus aromatischen Diaminen und aromatischen Dicarbonsäuredichloriden durch Wärmebehandlung eines aus einer Polymerisat-Gießlösung hergestellten Films, unter teilweise Verdampfung des Lösungsmittels und anschließender Koagulation des Polymerfilms in einem Nichtlösemittel.

Aus einer Zusammenfassung (vgl. S. M. Aharoni et al., J. Polym. Sci., Polym. Chem. Ed. 22, 2579 (1984) folgt, daß

- das zum Einsatz kommende Phosphit Arylgruppen enthalten muß und vorzugsweise Triphenylphosphit ist;
- die Arylphosphite mindestens in einer solchen Menge eingesetzt werden müssen, daß auf 1 Mol umzusetzendem Amid 1 Mol einer Verbindung mit der Gruppierung

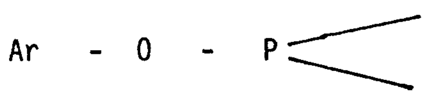

  kommt, da diese Gruppierung im Laufe der Reaktion verbraucht wird und diese Reaktion die treibende Kraft der Umsetzung darstellt;
- Pyridin für die Reaktion nicht notwendig ist, aber gleichwohl einen beschleunigenden Einfluß auf den Ablauf der Reaktion hat.

Neben diesen Verfahren, bei denen die Kondensation in einem Lösemittel durchgeführt wird, hat es auch Versuche gegeben, Polyamide in der Schmelze herzustellen. So beschreibt die US-PS 3 109 836 ein Verfahren zur Herstellung von Polyamiden der wiederkehrenden Einheiten (CO - Ar - NH), das darin besteht, Acetamidobenzoesäure 3 Stunden im Vakuum auf 200 bis 300 °C zu erhitzen. Dieses Verfahren liefert - im Gegensatz zu den Behauptungen in dieser Schrift - keine thermoplastisch verarbeitbaren Produkte, da die Schmelzpunkte der Reaktionsprodukte im Bereich der Zersetzungstemperatur oder darüber liegen.

Es ist auch vorgeschlagen worden, aromatische Polyamide durch Umamidierung von acylierten aromatischen Aminen in der Schmelze herzustellen. Abgesehen davon, daß eine solche Vorgehensweise die vorherige Herstellung der acylierten Amine erfordern würde, sind die mit diesem Verfahren erzielten Ergebnisse noch als recht unbefriedigend anzusehen. Um die Verarbeitbarkeit zu verbessern, wurden nicht rein aromatische Ausgangsverbindungen, sondern Gemische mit aliphatischen Vertretern eingesetzt. Die Diamine werden nicht vollständig, sondern nur teilweise acyliert. Schließlich wird der Reaktionsschmelze Essigsäure, Essigsäureanhydrid, Dimethylacetamid oder ein anderes Mittel zur Verbesserung der Fließfähigkeit zugesetzt. (vgl. Keske et al. Polymer Prepr. 25 Part XXV, S. 25 (1984) und US-PS 3 654 227).

Obwohl in der Monografie "Bühler Spezialplaste", Akademieverlag, Berlin (1978), wird auf Seite 412

darauf hingewiesen wird, daß die Methode der Schmelzpolykondensation auf die Darstellung aromatischer Polyamide aus aromatischen Dicarbonsäuren und einfachen aromatischen Diaminen nicht anwendbar sei, war es das ehrgeizige Ziel der vorliegenden Erfindung, ein Verfahren zur Herstellung aromatischer Polyamide durch eben diese Schmelzpolykondensation bereitzustellen.

Es wurde jetzt ein Verfahren gefunden, mit dem sich bestimmte aromatische Diamine mit aromatischen Dicarbonsäuren unmittelbar in der Schmelze zu Polyamiden umsetzen lassen. Erstaunlicherweise sind die neuen Produkte nicht nur thermoplastisch verarbeitbar, sondern auch unlöslich in polaren, hochsiedenden Lösungsmitteln wie z. B. N-Methylpyrrolidon, m-Kresol, Sulfolan, Dimethylsulfoxid und ähnlichen Lösemitteln.

Das Verfahren zur Herstellung der Polyamide besteht darin, daß man eine etwa äquimolare Mischung der aromatischen Dicarbonsäure und der aromatischen Diamine in der Schmelze bei Temperaturen zwischen 200 und 400 °C in Gegenwart

1. einer mindestens katalytisch wirksamen Menge von Triphenylphosphit oder einer vom Phosphor abgeleiteten Säure der Formel $H_3PO_n$ mit $2 < n < 4$ oder
2. einer katalytisch wirksamen Menge einer Mischung aus den genannten Phosphorverbindungen und einem 4-Dialkylaminopypridin umsetzt.

Der Zusatz der geringen Menge des Cokatalysators hat einen ganz erheblichen Effekt auf die Bildung des Polyamids.

- Das Molekulargewicht wird erheblich erhöht.
- Die Farbqualität des Polymeren wird deutlich verbessert.
- Die Polykondensationszeit wird drastisch reduziert.

Erfindungsgemäß können folgende aromatische Dicarbonsäuren oder deren Mischungen eingesetzt werden:

I. Isophthalsäure, die bis zu 60 Molprozent durch Terephthalsäure ersetzt sein kann, und wobei beide Säuren ein- oder mehrfach durch folgende Rest substituiert sein können
   a) $C_{1-6}$-Alkyl
   b) gegebenenfalls alkyl- oder arylsubstituierter Phenylrest
   c) Alkoxyrest mit 1 - 6 C-Atomen
   d) Phenoxyreste, wobei der Phenylring wiederum alkyl- oder arylsubstituiert sein kann
   e) Halogen, insbesondere Chlor und Brom,

II. und eine Dicarbonsäure der Formel

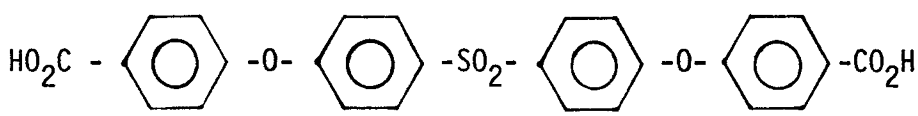

(vgl. Lorenz et al. Makromolekulare Chemie 130, 65 (1969),

III. eine Dicarbonsäure der allgemeinen Formel

$HO_2C - Ar - (A - Ar)_p - CO_2H$

mit Ar = m-Phenylen oder p-Phenylen
A = -O-, -S-, $SO_2$, -SO-, und
p = 0 oder 1

Erfindungsgemäß können folgende aromatische Diamine oder deren Mischungen eingesetzt werden:

$H_2N - Ar' - O - Ar'' - CO - Ar'' - O - Ar' - NH_2$ ,

Ar' und Ar'' stehen für m- oder insbesondere p-Phenylenreste, insbesondere 4,4'-Bis(4-aminophenoxy)-benzophenon, das durch Umsetzung von p-Aminophenol mit 4,4'-Difluorbenzophenon erhalten wird.

Bis zu 70 Molprozent der soeben aufgeführten Diamine können durch folgende aromatischen Diamine ersetzt werden:

Aromatische Diamine der allgemeinen Formel

$H_2N - Ar ((Z)_q - Ar )_r - NH_2$

mit Ar = m-Phenylen, p-Phenylen
Z = gleiche oder verschiedene Reste aus der Gruppe -O-, -S-, $-SO_2-$, -CO-, $-C(CH_3)-$
q = 0 oder 1
r = 0, 1 oder 2
Bezogen auf 1 Mol aromatischer Diamine werden 0,95 bis 1,05 Mol, vorzugsweise 1,0 Mol, aromatischer Dicarbonsäure eingesetzt.

Die Umsetzung der aromatischen Dicarbonsäuren mit den Diaminen wird in Gegenwart einer katalytischen Menge einer phosphorhaltigen Verbindung oder in Gegenwart einer katalytischen Menge eines Gemisches aus dieser phosphorhaltigen Verbindung und einem 4-Dialkylaminopyridin durchgeführt.

Geeignete phosphorhaltige Verbindungen umfassen Triphenylphosphit, Hypophosphorige Säure, Phosphorige Säure und Phoshorsäure.

Die als Cokatalysator eingesetzten 4-Dialkylaminopyridine weisen die Struktur

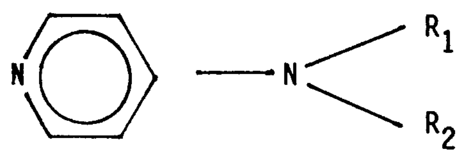

auf, wobei $R_1$ und $R_2$ entweder unabhängig voneinander für einen $C_{1-10}$-Alkylrest stehen oder zusammen mit dem Aminostickstoff einen Pyrrolidin- oder Piperidinring bilden können.
Bevorzugt sind:
4-Dimethylaminopyridin
4-Dibutylaminopyridin
4-Di-n-hexylaminopyridin
4-Piperidinylpyridin.

Die Pyridinderivate können gemäß Synthesis, (1978), 844, hergestellt werden.

Als Cokatalysator können ferner hochsiedende organische Basen mit tertiären Stickstoffatomen, wie z. B. Isochinolin oder Chinolin, sowie anorganische basische Salze, insbesondere Alkali- und Erdalkalicarbonate, wie z. B. Calciumcarbonat, eingesetzt werden.

Bezogen auf 100 Mol eingesetzter Dicarbonsäure werden jeweils 0,1 bis 10 Mol, vorzugsweise 1 - 5 Mol der phosphorhaltigen Verbindung und des CO-Katalysators eingesetzt.

Üblicherweise arbeitet man unter Inertgas bei Normaldruck. Es kann jedoch, wenn dies aus irgendwelchen Gründen wünschenswert sein sollte, auch bei leichtem Über- oder Unterdruck gearbeitet werden. Die zur Erzielung ausreichend hochmolekularer Produkte notwendigen Reaktionzeiten liegen zwischen 1 und 4 Stunden.

Die Polykondensation wird in der Schmelze bei Temperaturen zwischen 200 und 400 °C, vorzugsweise 250 bis 350 °C, durchgeführt. Es gibt insbesondere drei Varianten, in denen das Verfahren durchgeführt werden kann:

I. Die Reaktanden und die Katalysatoren werden gemeinsam aufgeschmolzen und bei Temperaturen zwischen 200 und 250 °C vorkondensiert. Dann wird die Temperatur über 280 °C auf maximal 350 bis 400 °C erhöht und das Präpolymere nachkondensiert. Der stattfindende Molekulargewichtsaufbau ist an der starken Erhöhung der Schmelzviskosität zu erkennen.

II. Eine Pulvermischung der Reaktanden und Katalysatoren wird in einem Kneter unter allmählicher Temperatursteigerung von 220 auf 380 °C solange behandelt, bis das bei der Kondensation entstehende Wasser entfernt ist. Alternativ ist es auch möglich, die Polykondensation in einem Extruder durchzuführen. Auch in diesem Fall beschickt man das Gerät mit einer Pulvermischung der Komponenten und sorgt durch geeignete Temperatureinstellung für eine vollständige Entfernung des Reaktionswassers.

III. Schließlich ist es auch möglich, entsprechend Variante I die Ausgangsprodukte zunächst zu einem Vorkondensat bei einer Temperatur von 200 bis 280 °C umzusetzen und anschließend das Vorkondensat in einem Kneter oder in einem Extruder nachzukondensieren. Im Extruder werden dann üblicherweise Temperaturen von 280 bis 400 °C, vorzugsweise 290 bis 380 °C` erforderlich sein. Diese Variante ist besonders bevorzugt.

Sollte das Endprodukt noch kein ausreichend hohes Molekulargewicht aufweisen, ist es möglich, eine Molekulargewichtserhöhung durch Festphasennachkondensation zu erzielen. Eine solche Vorgehensweise

ist dem Fachmann vertraut.

Zur Herstellung von ausreichend hochmolekularen Produkten ist es notwendig, das während der Polykonsation gebildete Wasser aus dem Reaktionssystem zu entfernen. Gemäß Variante I reicht hierzu das Über- bzw. Durchleiten von Inertgas aus. Es kann jedoch auch Vakuum angelegt werden.

Am Ende der Polykondensation erhält man eine mehr oder weniger viskose Schmelze des Polymeren, die direkt zu Granulat weiterverarbeitet werden kann. Die anfallenden Produkte können durch Verpressen bei erhöhter Temperatur (> 200 °C) zu Formteilen verarbeitet werden.

Beispiel 1

In einem Polykondensationsreaktor mit Rührer, Stickstoff-Einleitung und Destillationsbrücke wurden unter Stickstoff 9,91 g (0,025 Mol) 4,4'-Bis(4-aminophenoxy)benzophenon und 4,15 g (0,025 Mol) Isophthalsäure mit 0,1 ml 50 Gew.-%iger wäßriger Hypophosphoriger Säure und 0,12 g 4-Dimethylaminopyridin bei 250 °C aufgeschmolzen. Die viskose Schmelze wurde 20 Minuten unter kontinuierlicher Entfernung von Wasser gerührt. Danach wurde die Temperatur auf 300 °C erhöht und weitere 5 Minuten gerührt. Das Produkt war unlöslich und zeigte eine Glasübergangstemperatur von 235 °C.

Beispiel 2

Analog Beispiel 1 wurden 9,91 g (0,025 Mol) 4,4'-Bis(4-aminophenoxy)benzophenon, 2,49 g (0,015 Mol) Isophthalsäure und 1,66 g (0,01 Mol) Terephthalsäure mit 0,1 ml 50 Gew.-%iger wäßriger Hypophosphoriger Säure und 0,12 g 4-Dimethylaminopyridin umgesetzt. Die Glastemperatur betrug 240 °C.

## Patentansprüche

**1.** Verfahren zur Herstellung von hochmolekularem aromatischen Polyamid durch Kondensation von aromatischem Diamin und aromatischer Dicarbonsäure in Gegenwart eines phosphorhaltigen Katalysators,
dadurch gekennzeichnet,
daß
A. als aromatisches Diamin Verbindungen der allgemeinen Formel

$H_2N - Ar' - O - Ar'' - CO - Ar'' - O - Ar' - NH_2$

mit Ar', Ar'' = m- oder p-Phenylenrest eingesetzt werden, die bis zu 70 Mol-% durch aromatisches Diamin der allgemeinen Formel

$H_2N - Ar ((Z)_q - Ar)_r - NH_2$

ersetzt sein kann,
mit Ar = m-Phenylen, p-Phenylen
Z = gleiche oder verschiedene Reste aus der Gruppe -O-, -S-, $-SO_2-$, -CO-, $-C(CH_3)-$
q = 0 oder 1
r = 0, 1 oder 2,
B. als aromatische Dicarbonsäure
I. Isophthalsäure, die gegebenenfalls bis zu 60 Molprozent durch Terephthalsäure ersetzt sein kann und wobei beide Säuren ein- oder mehrfach durch folgende Reste substituiert sein können
a) $C_{1-6}$-Alkyl
b) gegebenenfalls alkyl- oder arylsubstituierter Phenylrest
c) Alkoxyrest mit 1 - 6 C-Atomen
d) Phenoxyreste, wobei der Phenylring wiederum alkyl- oder arylsubstituiert sein kann
e) Halogen, insbesondere Chlor und Brom,
und/oder
II. eine Säure der allgemeinen Formel

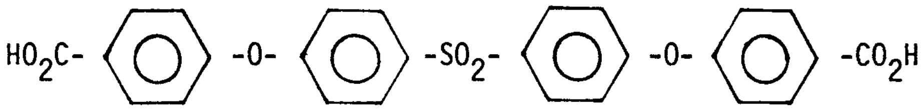

und/oder

III. eine Dicarbonsäure der allgemeinen Formel

$HO_2C - Ar - (A - Ar)_p - CO_2H$

mit Ar = m-Phenylen oder p-Phenylen

A = -O-, -S-, $-SO_2-$, -CO-, und

p = 0 oder 1

eingesetzt wird,

C. als Katalysator eine katalytische Menge von Triphenylphosphit oder einer vom Phosphor abgeleiteten Säure der Formel $H_3PO_n$ mit

n = 2, 3, 4

verwendet wird

und

D. die Kondensation in der Schmelze bei Temperaturen von 200 bis 400 °C durchgeführt wird.

**2.** Verfahren nach Anspruch 1,
dadurch gekennzeichnet,
daß als aromatisches Diamin 4,4'-Bis(4-aminophenoxy)benzophenon eingesetzt wird.

**3.** Verfahren nach den Ansprüchen 1 und 2,
dadurch gekennzeichnet,
daß als aromatische Dicarbonsäure Isophthalsäure verwendet wird.

**4.** Verfahren nach den Ansprüchen 1 bis 3,
dadurch gekennzeichnet,
daß neben dem phosphorhaltigen Katalysator als Cokatalysator ein 4-Dialkylaminopyridin, eine hochsiedende organische Base mit tertiärem Stickstoffatom oder ein anorganisches, basisches Salz eingesetzt wird.

**5.** Verfahren nach den Ansprüchen 1 bis 4,
dadurch gekennzeichnet,
daß die Schmelzkondensation bei einer Temperatur von 250 bis 350 °C durchgeführt wird.

**6.** Verfahren nach den Ansprüchen 1 bis 5,
dadurch gekennzeichnet,
daß die Schmelzkondensation in zwei Stufen durchgeführt wird, wobei die Temperatur in der ersten Stufe im Bereich bis 250 °C und die Temperatur in der zweiten Stufe über 280 °C gehalten wird.

**7.** Verfahren nach den Ansprüchen 1 bis 6,
dadurch gekennzeichnet,
daß die zweite Stufe der Schmelzkondensation in einem Kneter oder Extruder durchgeführt wird.

## Claims

**1.** A process for the preparation of a high-molecular-weight aromatic polyamide by condensing an aromatic diamine and an aromatic dicarboxylic acid in the presence of a phosphorus-containing catalyst, characterised in that

A. the aromatic diamine employed is a compound of the general formula

$H_2N - Ar' - O - Ar'' - CO - Ar'' - O - Ar' - NH_2$

where Ar' and Ar'' are m- or p-phenyl radicals, up to 70 mol % of which may be replaced by an aromatic diamine of the general formula

$H_2N - Ar ((Z)_q - Ar)_r - NH_2$

where Ar is m-phenylene or p-phenylene,
Z are identical or different radicals from the group comprising -O-, -S-, $-SO_2-$, -CO- and $-C(CH_3)-$,
q is 0 or 1 and
r is 0, 1 or 2,
B. the aromatic dicarboxylic acid employed is
I. Isophthalic acid, up to 60 mol per cent of which may, if desired, be replaced by terephthalic acid and where the two acids may be monosubstituted or polysubstituted by the following radicals:
a) $C_{1-6}$-alkyl,
b) a phenyl radical which is unsubstituted or substituted by alkyl or aryl,
c) an alkoxy radical having 1 - 6 carbon atoms,
d) phenoxy radicals, in which the phenyl ring may in turn be substituted by alkyl or aryl,
e) halogen, in particular chlorine or bromine,
and/or
II. an acid of the general formula

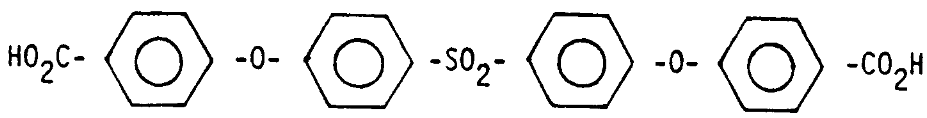

and/or
III. a dicarboxylic acid of the general formula

$HO_2C - Ar - (A - Ar)_p - CO_2H$

where Ar is m-phenylene or p-phenylene,
A is -O-, -S-, $-SO_2-$ or -CO-, and
p is 0 or 1,
C. the catalyst used is a catalytic amount of triphenyl phosphite or a phosphorus-derived acid of the formula $H_3PO_n$ where
n is 2, 3 or 4, and
D. the condensation is carried out in the melt at temperatures of from 200 to 400 °C.

**2.** A process according to claim 1, characterised in that the aromatic diamine employed is 4,4'-bis(4-aminophenoxy)benzophenone.

**3.** A process according to either of claims 1 and 2, characterised in that the aromatic dicarboxylic acid used is isophthalic acid.

**4.** A process according to any of claims 1 to 3, characterised in that a 4-dialkylaminopyridine, a high-boiling organic base containing a tertiary nitrogen atom or an inorganic basic salt is employed as cocatalyst in addition to the phosphorus-containing catalyst.

**5.** A process according to any of claims 1 to 4, characterised in that the melt condensation is carried out at a temperature of from 250 to 350 °C.

**6.** A process according to any of claims 1 to 5, characterised in that the melt condensation is carried in two steps, the temperature in the first step being in the range up to 250 °C and the temperature in the second step being kept above 280 °C.

**7.** A process according to any of claims 1 to 6, characterised in that the second step of the melt

condensation is carried out in a compounder or extruder.

**Revendications**

1. Procédé pour la préparation d'une polyamide aromatique de poids moléculaire élevé, par condensation d'une diamine aromatique et d'un acide dicarboxylique aromatique en présence d'un catalyseur contenant du phosphore,
caractérisé par le fait
A. que l'on utilise, comme diamine aromatique, des composés de la formule générale

$H_2N - Ar' - O - Ar'' - CO - Ar'' - O - Ar' - NH_2$ ,

dans laquelle Ar', Ar'' représentent un radical méta- ou para-phénylène qui peut être remplacé, jusqu'a 70 mol-%, par une diamine aromatique de la formule générale

$H_2N - Ar ((Z)_q - Ar)_r - NH_2$ ,

dans laquelle Ar représente un radical méta-phénylène, para-phénylène, Z représente des radicaux identiques ou différents du groupe
$- O -, - S -, - SO_2 -, - CO -, - C(CH_3)-$,
q est égal à zéro ou 1, r est égal à zéro, à 1 ou à 2,
B. que l'on utilise, en tant qu'acide dicarboxylique aromatique :
I. de l'acide isophtalique, qui peut, le cas échéant, être remplacé jusqu'à 60 mol-% par de l'acide téréphtalique, les deux acides pouvant être substitués une ou plusieurs fois par les radicaux suivants :
a) un alkyle en $C_1$ à $C_6$
b) le cas échéant, un radical phényle alkyl- ou aryl-substitué
c) un radical alkoxy comportant de 1 à 6 atomes de carbone
d) des radicaux phénoxy, le cycle phényle pouvant être à son tour alkyl- ou aryl-substitué
e) un halogène, particulièrement du chlore et du brome,
et/ou
II. un acide de la formule générale :

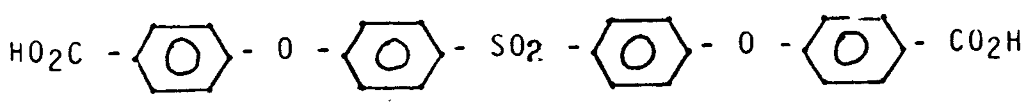

et/ou
III. un acide dicarboxylique de la formule générale

$HO_2C - Ar - (A - Ar)_p - CO_2H$

dans laquelle Ar représente un radical m-phénylène ou p-phénylène, A représente -O-, -S-, $-SO_2-$, -CO-, et p est égal à zéro ou à 1,
C. que l'on utilise, comme catalyseur, une quantité catalytique de phosphite de triphényle ou d'un acide dérivé du phosphore, de formule $H_3PO_n$, dans laquelle n est égal à 2, 3, 4,
et
D. que l'on effectue la condensation dans la masse en fusion, à des températures de 200 à 400 °C.

2. Procédé selon la revendication 1,
caractérisé par le fait que l'on utilise, comme diamine aromatique, de la 4,4'-bis-(4-amino-phénoxy)-benzophénone.

3. Procédé selon les revendications 1 et 2,
caractérisé par le fait que l'on utilise, comme acide dicarboxylique aromatique, de l'acide isophtalique.

4. Procédé selon les revendications 1 à 3,

caractérisé par le fait qu'outre le catalyseur renfermant du phosphore, on utilise comme co-catalyseur une 4-dialkylamino-pyridine, une base organique à point d'ébullition élevé qui comporte un atome d' azote tertiaire, ou un sel minéral basique.

**5.** Procédé selon les revendications 1 à 4,
caractérisé par le fait que l'on effectue la condensation en fusion, à une température de 250 à 350 ° C.

**6.** Procédé selon les revendications 1 à 5,
caractérisé par le fait que l'on effectue en deux stades la condensation en fusion, la température étant maintenue dans un domaine allant jusqu'à 250 ° C dans le premier stade et au-dessus de 280 ° C dans le second stade.

**7.** Procédé selon les revendications 1 à 6,
caractérisé par le fait que l'on effectue le second stade de la condensation en fusion dans un pétrin ou dans une extrudeuse.